# EUROPEAN PATENT SPECIFICATION

(11) **EP 3 262 848 B1**
(45) Date of publication and mention of the grant of the patent: **16.03.2022**
(21) Application number: 15843978.6
(22) Date of filing: 11.11.2015
(51) Int. Cl.: G10K 11/02, H04R 1/26, H04R 3/04, B06B 1/02, B06B 1/06, H04R 3/00, H04R 5/02

(54) **WEARABLE AUDIO DEVICE**
TRAGBARE-AUDIOVORRICHTUNG
DISPOSITIF AUDIO PORTABLE

(30) Priority: 27.02.2015 US 201514634012
(43) Date of publication of application: 03.01.2018
(73) Proprietor: Samsung Electronics Co., Ltd., Gyeonggi-do 16677 (KR)
(72) Inventor: STAUBER, Mark, Palo Alto, California 94306 (US); BAU, Olivier, San Francisco, California 94110 (US); CHO, Junyeon, San Jose, California 95134 (US)
(74) Representative: HGF
(86) International application number: PCT/IB2015/058694
(87) International publication number: WO 2016/046810

(56) References cited:
- GB-A- 2 424 536
- JP-A- 2002 262 394
- JP-A- 2003 189 381
- US-A1- 2009 036 780
- US-A1- 2009 322 513
- US-A1- 2013 343 161
- US-A1- 2014 117 814
- US-A1- 2014 117 814
- US-A1- 2014 241 540
- US-A1- 2014 276 247

## Description

### Technical Field

This disclosure generally relates to wearable audio devices.

### Background Art

Personal audio listening is most commonly accomplished through headphones, headsets, earbuds etc. that require the user to put something in or on the ear. This is an invasive way to listen compared to how one listens naturally with nothing covering the ear. Personal audio listening device may also involve wires coming from the headset that can be a nuisance, and there are challenges to keeping listening device in place on or in the ear when playing sports or being active. In addition, headsets occlude the ear from other environmental sounds making headset listening incompatible with other activities such as driving, work settings, and anything that requires attention to sounds from the environment. The duration for which personal audio devices can be worn may be limited due to the health risks of prolonged sound exposure, discomfort, or the need to hear sound from the outside environment

Published US patent application US 2013/0343161 A1 describes an apparatus and method for transmitting an acoustic signal using a human body. The acoustic signal transmitting apparatus includes: a pre-processor configured to perform processing for compensating for transfer distortion of an acoustic signal, a controller configured to control beamforming of the acoustic signal whose transfer distortion has been compensated for; and a plurality of acoustic devices configured to transfer the acoustic signal to a human body which the plurality of acoustic devices have contacted, through beamforming according to a control of the controller.

Japanese patent application JP 2003189381 A relates to an electroacoustic transducer that emits an ultrasonic wave subjected to amplitude modulation by an audible signal to a human body so as to produce the audible tone in the human body. The transducer can provide only audible tone vibration without applying ultrasonic wave vibration to the human body.

### Disclosure of Invention

### Solution to Problem

An embodiment of the present invention provides a device comprising: a first transducer configured to vibrate within a first frequency range to generate a signal audible by a wearer of the device; a first material on or near a first surface of the first transducer, the first material having an acoustic impedance at one or more frequencies within the first frequency range that is substantially similar to an acoustic impedance of the wearer's skin at the one or more frequencies; a second material on or near at least a second surface of the first transducer, the second material having an acoustic impedance at one or more frequencies within the first frequency range that substantially differs from an acoustic impedance of an environment of the device; and a microphone configured to receive a reflected signal of the generated signal reflected by the wearer's body; and wherein the device is further configured to: determine, based on the received reflected signal, a location of the device relative to at least one of the wearer's ears; and adjust a frequency or an amplitude of the signal generated by the first transducer based on the determined location of the device.

### Brief Description of Drawings

The above and/or other aspects will be more apparent by describing certain exemplary embodiments, with reference to the accompanying drawings, in which:
FIGs. 1a and 1b each illustrate a cross-sectional view of an example transducer assembly.
FIG. 2 illustrates an example wearable audio device that includes example transducer assemblies.
FIG. 3 illustrates an example wearable audio device worn about a person's neck.
FIG. 4 illustrates example contact locations for a wearable audio device.
FIG. 5 illustrates an example computer system.

### Best Mode for Carrying out the Invention

According to an aspect of the present invention, a device is provided in accordance with claim 1.

According to a further aspect of the present invention, a method provided in accordance with claim 14.

The invention is defined by the independent claims. Further aspects of the invention are outlined in the dependent claims. When the term embodiment is used for describing unclaimed combinations of features, the term is understood as referring to examples useful for understanding the invention.

Certain embodiments of the invention have other steps or elements in addition to those mentioned above. The steps or elements will become apparent to those skilled in the art from a reading of the following detailed description when taken with reference to the accompanying drawings.

### Mode for the Invention

The embodiments are described in sufficient detail to enable those skilled in the art to make and use the invention. It is to be understood that other embodiments would be evident based on the present disclosure, and that system, process, or mechanical changes may be made without departing from the scope of the present invention, which is defined by the appended claims.

In the following description, numerous specific details are given to provide a thorough understanding of the invention. However, it will be apparent that the invention may be practiced without these specific details. In order to avoid obscuring the embodiments of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation.

The term "module" referred to herein can include software, hardware, or a combination thereof in the embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

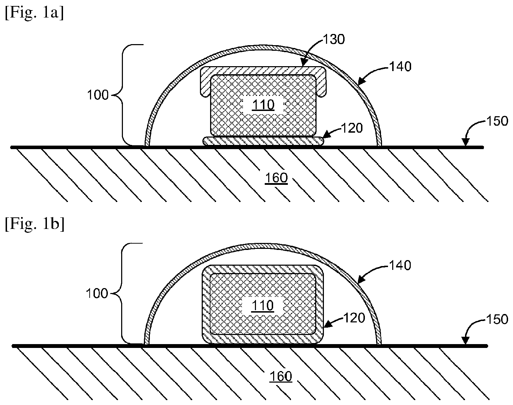

FIGs. 1a and 1b each illustrate a cross-sectional view of an example transducer assembly 100. In the example of FIGs. 1a and 1b, a portion of transducer assembly 100 is in contact with a person's outer layer of skin 150. In particular embodiments, transducer assembly 100 may generate an acoustic signal and mechanically couple the acoustic signal to skin layer 150 at an area where transducer assembly 100 contacts skin layer 150. The acoustic signal may then propagate through a portion of a person's body 160. As an example and not by way of limitation, transducer assembly 100 may be configured to generate an acoustic signal that is coupled to a wrist area of a person's body. The acoustic signal may then propagate through the person's arm, and a portion of the acoustic signal may reach the person's ears where it is perceived or heard by the person as a sound, such as for example, a beep, a click, a tone, music, a person's voice, or any other suitable sound. In particular embodiments, transducer assembly 100 may be referred to as a transducer. In particular embodiments, a wearable audio device may include one or more transducer assemblies 100, where each transducer assembly 100 is configured to be in contact with a person's skin and transmit an acoustic signal into the person's body. A portion of the acoustic signal from each transducer assembly 100 of a wearable audio device may propagate through the person's body to one or both of the person's ears where a sound corresponding to the acoustic signal may be heard by the person wearing the audio device.

In particular embodiments, transducer assembly 100 may include transducer 110. In particular embodiments, transducer 110 may be an electroacoustic device configured to receive an electrical drive signal that causes a portion of transducer 110 to mechanically move, vibrate, or oscillate. The movement, vibration, or oscillation (which may be used interchangeably herein, as appropriate) of transducer 110 may produce an acoustic signal based on the electrical drive signal. As an example and not by way of limitation, an acoustic signal produced by transducer 110 may match or be related to one or more frequency, amplitude, or phase characteristics of a driving electrical signal. When transducer 110 is in contact with a portion of skin 150 of a person's body 160, an acoustic signal may be coupled to the person's skin 150 and into the person's body 160. Transducer 110 may be referred to as an actuator, an acoustic transducer, an audio transducer, an ultrasonic transducer, a piezoelectric transducer, or an ultrasonic piezoelectric transducer.

In particular embodiments, transducer 110 may be a piezoelectric-based device, a magnetostriction-based device, a capacitive transducer, or any other suitable type of transducer. As an example and not by way of limitation, transducer 110 may be a piezoelectric transducer which includes a piezoelectric material that changes size when an electric voltage is applied to the material. By applying an electrical drive signal at a particular frequency or range of frequencies to piezoelectric transducer 110, a portion of piezoelectric transducer 110 can be made to move or oscillate at the drive frequency or frequencies. As an example and not by way of limitation, applying a 1-kHz electrical drive signal to transducer 110 may cause a portion of transducer 110 to mechanically vibrate at 1 kHz, and transducer 110 may then produce a 1-kHz acoustic signal. With a portion of transducer assembly 100 in contact with skin layer 150, the 1-kHz acoustic signal may be mechanically coupled into a person's body where a portion of the signal may propagate to the person's ears, causing the person to hear a 1-kHz tone. As another example and not by way of limitation, by applying, to transducer 110, an electrical drive signal having a particular frequency range (e.g., a 10 Hz to 20 kHz range corresponding to an audible signal), transducer 110 may produce an acoustic signal having a similar frequency range. Although this disclosure describes and illustrates particular transducer assemblies having particular types of transducers, this disclosure contemplates any suitable transducer assemblies having any suitable types of transducers and any suitable number of transducers. In particular embodiments, a transducer assembly may include more than one type of transducer.

In particular embodiments, an acoustic signal may refer to a mechanical wave of pressure and displacement that propagates through a material or a combination of materials. As an example and not by way of limitation, an acoustic signal may propagate through air, water, skin 150, or a person's body 160. As another example and not by way of limitation, an acoustic signal may be coupled into a person's body 160 by vibration of a portion of transducer 110 in contact with skin layer 150, and the acoustic signal may propagate through a combination of skin 150, muscle, fat, blood, or bone. In particular embodiments, an acoustic signal may be referred to as an audio signal, an audible signal, an acoustic wave, sound, a sound wave, or an ultrasonic signal.

In particular embodiments, an acoustic signal generated by transducer 110 may be composed of any suitable acoustic frequency or range or combination of acoustic frequencies. In particular embodiments, an acoustic signal generated by transducer assembly 100 may be composed of acoustic frequencies in an audible frequency range (e.g., from approximately 10 Hz to approximately 20 kHz), where an audible frequency refers to a frequency that can be heard or perceived by a human ear. As an example and not by way of limitation, an acoustic signal produced by transducer 110 and configured to transmit a person's voice (e.g., for a phone conversation) may have a frequency range from approximately 20 Hz to approximately 3 kHz. As another example and not by way of limitation, an acoustic signal produced by transducer 110 and configured to transmit music may have a frequency range from approximately 20 Hz to approximately 16 kHz. As another example and not by way of limitation, an acoustic signal for transmitting a notification (e.g., a beep, a click, or a tone) may have a central frequency of approximately 2 kHz with a bandwidth or range of approximately 200 Hz about the 2-kHz central frequency.

In particular embodiments, an acoustic signal generated by transducer 110 may be composed of acoustic frequencies in an ultrasonic frequency range (e.g., ≥20 kHz), where an ultrasonic frequency (or, ultrasound frequency) refers to a frequency greater than a maximum frequency that can be heard or perceived by a human ear. As an example and not by way of limitation, transducer 110 may produce an acoustic signal in an ultrasonic range of frequencies (e.g.,. between 20 kHz and 100 kHz, between 36 kHz and 44 kHz, or between any suitable range of ultrasonic frequencies). As another example and not by way of limitation, transducer 110 may produce an ultrasonic signal that includes an audible signal combined or mixed with a carrier frequency, such as for example a 40 kHz carrier frequency. For example, a 40 kHz carrier signal may be amplitude modulated by a music signal, and the resulting amplitude-modulated acoustic signal may have a frequency range of approximately 30 kHz to 50 kHz. As another example and not by way of limitation, a 40 kHz carrier signal may be amplitude modulated by a voice signal, and the resulting amplitude-modulated acoustic signal may have a frequency range of approximately 38 kHz to 42 kHz. In particular embodiments, an acoustic signal generated by transducer assembly 100 may have an acoustic frequency range in any suitable combination of audible or ultrasonic frequency ranges. As an example and not by way of limitation, transducer 110 may produce an acoustic signal over any suitable range of frequencies that may include audible frequencies, ultrasonic frequencies, or any suitable combination thereof (e.g., between 20 Hz and 100 kHz or between 10 kHz and 50 kHz). Although this disclosure describes and illustrates particular transducers configured to produce particular acoustic signals having particular frequency ranges, this disclosure contemplates any suitable transducers configured to produce any suitable acoustic signals having any suitable frequency ranges.

In particular embodiments, an acoustic signal generated by transducer 110 may have similar frequency, amplitude, or phase characteristics of a corresponding audio signal. As an example and not by way of limitation, an audio signal representing a person's voice may have a particular frequency range (e.g., 20 Hz to 3 kHz) and a particular frequency spectrum that represents the relative strength or amplitude of the various frequency components. An acoustic signal corresponding to the 20 Hz?3 kHz audio signal may have a similar frequency range and a similar frequency spectrum. In particular embodiments, an acoustic signal generated by transducer assembly 100 may be a modulated, mixed, or transformed version of a corresponding audio signal and may have different frequency, amplitude, or phase characteristics from the audio signal. As an example and not by way of limitation, an acoustic signal may be an amplitude-modulated version of an input audio signal that is produced by mixing the audio signal with a carrier signal (e.g., a 40 kHz carrier signal). In particular embodiments, an acoustic signal may be based on an amplitude modulation, frequency modulation, phase modulation, or any suitable signal-modulation scheme applied to an input audio signal. In particular embodiments, an acoustic signal may be based on an audio signal with different gain values applied to different frequencies. As an example and not by way of limitation, lower acoustic frequencies may experience greater loss than higher frequencies when propagating through a person's body 160, and to compensate for this greater loss, an acoustic signal may be generated from an audio signal by boosting the gain of lower-frequency components relative to higher-frequency components. Although this disclosure describes particular acoustic signals having particular frequency, amplitude, or phase characteristics or having particular signal-modulation schemes, this disclosure contemplates any suitable acoustic signals having any suitable frequency, amplitude, or phase characteristics or having any suitable signal-modulation schemes.

In particular embodiments, transducer assembly 100 may include acoustic couplant 120. Acoustic couplant 120 may facilitate the transmission or coupling of an acoustic signal from transducer 110 to a person's skin layer 150 and into body 160 of the person. In particular embodiments, the acoustic impedance of transducer 110 may not be well matched to the acoustic impedance of air, and so transducer 110 may not efficiently couple an acoustic signal into air. In particular embodiments, the acoustic impedance of transducer 110 may be well matched to the acoustic impedance of a person's skin layer 150 or body 160. If a surface of transducer 110 makes good mechanical contact with a person's skin layer 150, then transducer 110 may be able to efficiently couple an acoustic signal into a person's body 160. However, small air pockets or other material disposed between transducer 110 and skin layer 150 may lead to an impedance mismatch that prevents efficient coupling of an acoustic signal directly from transducer 110 to skin 150 or body 160. Moreover, rather than being coupled from transducer 110 to skin 150 or body 160, a significant portion of an acoustic signal may be reflected away from a transducer-air interface due to an impedance mismatch between transducer 110 and one or more air pockets. In particular embodiments, a first material such as, for example, acoustic couplant 120 may provide an acoustic impedance match between transducer 110 and skin 150 or body 160 so that an acoustic signal is coupled from transducer 110 to skin 150 or body 160 with relatively high efficiency and with relatively low reflection losses. In addition or the alternative, acoustic couplant 120 may provide good mechanical coupling between transducer 110 and skin layer 150, and acoustic couplant 120 may substantially reduce or remove air cavities between transducer 110 and skin layer 150. In particular embodiments, acoustic couplant 120 may include a material that has an acoustic impedance that matches or is similar to the acoustic impedances of transducer 110 and skin layer 150 or body 160. Although this disclosure describes and illustrates particular acoustic couplants having particular acoustic impedance properties, this disclosure contemplates any suitable acoustic couplants having any suitable acoustic impedance properties.

In particular embodiments, acoustic couplant 120 may include a liquid, gel, or paste material that is mechanically flexible or deformable. As examples and not by way of limitation, acoustic couplant 120 may include silicone, glycerin, water, oil, grease, or propylene glycol. In particular embodiments, acoustic couplant 120 may include a liquid, gel, or paste material contained in a flexible enclosure. As an example and not by way of limitation, acoustic couplant 120 may include an amount of silicone contained within a flexible plastic enclosure (e.g., a sealed enclosure made of vinyl or polyethylene). As another example and not by way of limitation, acoustic couplant 120 may include an amount of silicone in gel form that is contained within a layer of silicone that has been cured or hardened to form a flexible, substantially non-porous outer layer that contains the gel-like silicone within. In particular embodiments, acoustic couplant 120 may include a flexible or compliant solid material (e.g., a material having low stiffness or rigidity) that conforms to contours of a person's body 160 and efficiently couples an acoustic signal from transducer 110 into the person's body 160. As examples and not by way of limitation, acoustic couplant 120 may include a sheet or layer of flexible material, such as for example, a sheet or layer of vinyl, rubber, or foam. In particular embodiments, acoustic couplant 120 may include a solid structure that is less rigid than the body of transducer 110 so that an acoustic vibration is efficiently coupled through couplant 120. As an example and not by way of limitation, acoustic couplant 120 may be a metallic or plastic structure that is flexible or spring-like and allows couplant 120 to conform to skin layer 150 and efficiently couple an acoustic signal to skin layer 150 or body 160. Although this disclosure describes and illustrates particular acoustic couplants that include particular materials, this disclosure contemplates any suitable acoustic couplants that include any suitable materials.

In particular embodiments, acoustic couplant 120 may be a separate object that is attached to transducer 110. As an example and not by way of limitation, acoustic couplant 120 may include a gel-like material contained within a vinyl enclosure, and a portion of the vinyl enclosure may be attached (e.g., with adhesive or epoxy) to a bottom surface of transducer 110. As illustrated in the example of FIG. 1a acoustic couplant 120 may include a layer of material disposed between a surface of transducer 110 and skin layer 150. As an example and not by way of limitation, acoustic couplant 120 may be attached to a bottom surface of transducer 110 and may be configured to conform to skin layer 150 when transducer assembly 100 is in contact with a person's body. In particular embodiments, acoustic couplant 120 may be integrated into or combined with transducer 110. As an example and not by way of limitation, a surface or a portion of the housing of transducer 110 may be made from a material that functions as an acoustic couplant 120. For example, the portion of transducer 110 configured to vibrate and produce an acoustic signal may include a rubbery or flexible material that provides good mechanical contact with skin layer 150 and a good acoustic impedance match to skin layer 150 or body 160.

In particular embodiments, acoustic couplant 120 may include an object or material that surrounds or contains transducer 110. As illustrated in the example of FIG. 1b, acoustic couplant 120 may include a gel-like material that surrounds transducer 110, and the gel-like material and transducer 110 may be contained together within an enclosure. As an example and not by way of limitation, transducer 110 may be immersed in silicone, and both the silicone and transducer 110 may be contained within a vinyl enclosure. As another example and not by way of limitation, transducer 110 may be immersed in silicone, and the silicone and transducer 110 may be contained within a layer of silicone that has been cured or hardened to form a flexible, substantially non-porous outer layer. In particular embodiments, enclosing transducer 110 within acoustic couplant 120 may direct acoustic waves emitted from one or more surfaces of transducer 110 to an area of contact between acoustic couplant 120 and skin 150 where there is a good impedance match. Although this disclosure describes and illustrates particular acoustic couplants disposed in particular manners with respect to particular transducers, this disclosure contemplates any suitable acoustic couplants disposed in any suitable manner with respect to any suitable transducers. For example, two or more of the example acoustic couplants described herein may be layered or otherwise combined or coupled to transmit an acoustic signal from a transducer to layer of skin.

In particular embodiments, transducer assembly 100 may include a second material such as, for example, impedance-mismatch element 130. In particular embodiments, impedance-mismatch element 130 may include a material having a different acoustic impedance than that of transducer 110 or of an environment of transducer 110. For example, impedance-mismatch element 130 may provide an impedance mismatch that reflects or absorbs a portion of an acoustic signal produced by transducer 110. An impedance-mismatch element 130 may substantially reduce the amount of acoustic signal that is emitted into the surrounding environment, such as for example air, around transducer 110. In particular embodiments, impedance-mismatch element 130 may be applied or attached to any surface not configured to conduct an acoustic signal to skin 150 or body 160. In particular embodiments, impedance-mismatch element 130 may include a separate object that is attached to transducer 110. In the example of FIG. 1a, impedance-mismatch element 130 includes a layer of material attached to a top surface of transducer 110 and a portion of the sides of transducer 110. In particular embodiments, transducer assembly 100 may not include a separate or discrete impedance-mismatch element 130. In particular embodiments, impedance-mismatch element 130 may be integrated into or combined with transducer 110. As an example and not by way of limitation, a portion of the housing or outer surface of transducer 110 may be made of a material (e.g., aluminum or a hard plastic material) that has an impedance mismatch relative to air. An aluminum housing of transducer 110 may have a poor impedance match with air, providing for a relatively small amount of coupling of an acoustic signal from transducer into the surrounding air. In particular embodiments, transducer assembly 100 may not include an impedance-mismatch element 130. In the example of FIG. 1b, transducer assembly 100 does not include an impedance-mismatch element 130. In FIG. 1b, transducer 110 is surrounded by acoustic couplant 120 which provides an impedance-matching coupling between surfaces of transducer 110 and skin layer 150. In FIG. 1b, rather than being reflected or emitted into the surrounding air, an acoustic signal emitted by a surface of transducer 110 may propagate through acoustic couplant 120 and then be coupled to skin layer 150. Although this disclosure describes and illustrates particular transducer assemblies that include particular impedance-mismatch elements, this disclosure contemplates any suitable transducer assemblies that include any suitable impedance-mismatch elements.

In particular embodiments, transducer assembly 100 may include isolation element 140. As illustrated in FIGs. 1a and 1b, isolation element 140 may enclose or cover other elements of transducer assembly 100 and may form an outer layer of transducer assembly 100. In particular embodiments, isolation element 140 may also be at least part of impedance-mismatch element 130. In particular embodiments, isolation element 140 may absorb, attenuate, or reflect a significant portion of an acoustic signal emitted by transducer 110 into the surrounding environment of transducer assembly 110, such as for example air. In particular embodiments, isolation element 140 may substantially reduce leakage of an acoustic signal from transducer 110 into the environment surrounding transducer assembly 100. As an example and not by way of limitation, isolation element 140 may reduce leakage of an acoustic signal into the surrounding environment so that a person wearing an audio device with transducer assembly 100 may be able to hear an audio signal from transducer assembly 100 without that signal being overheard by other people located nearby. In particular embodiments, isolation element 140 may provide a mismatch of acoustic impedance between the interior of transducer assembly 100 and the environment surrounding transducer assembly 100. In particular embodiments, isolation element 140 may include any suitable material that substantially absorbs, attenuates, or reflects an acoustic signal emitted by transducer 110. As examples and not by way of limitation, isolation element 140 may include one or more of the following materials: cotton, plastic, cork, rubber, vinyl, polyurethane foam, soundproof foam, cardboard, a gel material, or any suitable combination thereof. Although this disclosure describes and illustrates particular transducer assemblies that include particular isolation elements, this disclosure contemplates any suitable transducer assemblies that include any suitable isolation elements.

In particular embodiments, transducer assembly 100 may include both an impedance-mismatch element 130 and an isolation element 140. As illustrated in FIG. 1a, transducer assembly 100 includes impedance-mismatch element 130 and isolation element 140. In particular embodiments, transducer assembly 100 may include impedance-mismatch element 130 and not include isolation element 140. In particular embodiments and as illustrated in FIG. 1b, transducer assembly 100 may include acoustic couplant 120 and isolation element 140 and may not include impedance-mismatch element 130. In particular embodiments, transducer assembly 100 may include isolation element 140, and although a discrete impedance-mismatch element 130 may not be present, a portion of transducer 110 may include a material that performs as an impedance-mismatch element by preventing a significant amount of an acoustic signal from being coupled to the surrounding environment. In particular embodiments, transducer assembly 100 may include a single object that performs as both an impedance-mismatch element 130 and an isolation element 140. In particular embodiments impedance-mismatch element 130 or isolation element 140 may enable a user to hear an audio signal from transducer assembly 100 without that sound being overheard by other people nearby, or with that sound being heard at a reduced volume by other people nearby. As an example and not by way of limitation, impedance-mismatch element 130 or isolation element 140 may reflect or absorb an acoustic signal preventing most of that signal from propagating into the air surrounding transducer assembly 100. Although this disclosure describes and illustrates particular transducer assemblies that include particular combinations of acoustic couplants, impedance-mismatch elements, or isolation elements, this disclosure contemplates any suitable transducer assemblies that include any suitable combination of acoustic couplants, impedance-mismatch elements, or isolation elements.

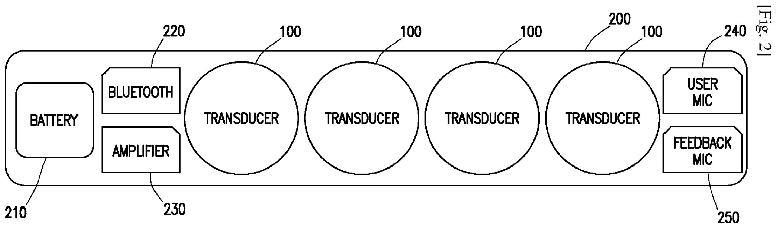

FIG. 2 illustrates an example wearable audio device 200 that includes example transducer assemblies 100. In particular embodiments, wearable audio device 200 may be configured to be worn on or around, attached to, or in contact with a part of a person's body. In particular embodiments, wearable audio device 200 may include 1, 2, 3, 4, 6, 10, or any suitable number of transducer assemblies 100. As an example and not by way of limitation, wearable audio device 200 may be configured to be worn around a user's wrist, and wearable audio device 200 may include a single transducer assembly used to send acoustic signals that are heard as notifications (e.g., beeps, clicks, or tones) by the user. In the example of FIG. 2, wearable audio device 200 includes four transducer assemblies 100, and wearable audio device 200 may be configured to be worn near or around a person's neck or shoulder area. In particular embodiments, wearable audio device 200 may include a single transducer assembly 100 configured to produce an acoustic signal over a particular audible frequency range (e.g., 10 Hz?3 kHz or 20 Hz?20 kHz), a particular ultrasonic frequency range (e.g., 30 kHz?50 kHz or 20 kHz?100 kHz), or over a particular broad frequency range that includes audible and ultrasonic frequencies (e.g., 20 Hz?100 kHz or 10 kHz?50 kHz). In particular embodiments, wearable audio device 200 may include two or more transducer assemblies 100, each assembly configured to produce an acoustic signal over a particular frequency range. As an example and not by way of limitation, wearable audio device 200 may include two transducer assemblies 100, one transducer assembly 100 for operation in an audible frequency range (e.g., 20 Hz?20 kHz) and another transducer assembly 100 for operation in an ultrasonic frequency range (e.g., 20 kHz?100 kHz). As another example and not by way of limitation, wearable audio device 200 may include three transducer assemblies 100 that together cover a particular audible or ultrasonic frequency range (e.g., the three transducer assemblies 100 may operate at 20 Hz?3 kHz, 3 kHz?8 kHz, and 8 kHz?16 kHz, respectively, so that together they cover a frequency range from 20 Hz to 16 kHz). As another example and not by way of limitation, wearable audio device 200 may be configured to provide a two-channel (or, stereophonic) audio signal, and wearable audio device 200 may include two transducer assemblies 100 that provide a left-channel signal to a person's left ear and another two transducer assemblies 100 that provide a right-channel signal to a person's right ear. Although this disclosure describes and illustrates particular wearable audio devices that include particular transducer assemblies configured to produce particular acoustic signals over particular frequency ranges, this disclosure contemplates any suitable wearable audio devices that include any suitable transducer assemblies configured to produce any suitable acoustic signals over any suitable frequency ranges.

In particular embodiments, wearable audio device 200 may include a power source (e.g., battery 210) or a connection to an external power source. In the example of FIG. 2, wearable audio device 200 includes battery 210 for supplying electrical power to electronic devices included in wearable audio device 200. In particular embodiments, battery 210 may be a rechargeable battery. In particular embodiments, wearable audio device 200 may include wireless device 220 for sending or receiving information using a wireless communication protocol (e.g., BLUETOOTH, WI-FI, or cellular). In the example of FIG. 2, wireless device 220 is a BLUETOOTH device 220 for sending or receiving wireless signals using a BLUETOOTH communication protocol. As an example and not by way of limitation, BLUETOOTH device 220 may receive a music signal from a user's smartphone, and transducer assemblies 100 of wearable audio device 200 may produce an acoustic signal based on the received music signal. In particular embodiments, wearable audio device 200 may include one or more electronic amplifiers 230. As an example and not by way of limitation, wearable audio device 200 may include one or more electronic amplifiers 230 for amplifying and supplying a drive signal to one or more transducer assemblies 100. In particular embodiments, each transducer assembly 100 may be associated with an electronic amplifier 230 that supplies a drive signal. In particular embodiments, wearable audio device 200 may include a processor. As an example and not by way of limitation, a processor may receive a digital signal from BLUETOOTH device 220 and generate a low-amplitude, analog drive signal, which is sent to amplifier 230 for amplification. In particular embodiments, wearable audio device 200 may include user microphone 240 for receiving audio input from a user wearing the device. As an example and not by way of limitation, user microphone 240 may be used to receive voice commands from a user. As another example and not by way of limitation, wearable audio device 200 may function as a wireless communication device (e.g., a cellular phone), and user microphone 240 may receive a user's voice as part of a phone conversation. In particular embodiments, user microphone 240 may be used to sample sounds or noise from the surrounding environment for active noise cancelling. In particular embodiments, wearable audio device 200 may include a device for determining a user's location, such as for example a device that uses the Global Positioning System (GPS) to determine location. As an example and not by way of limitation, wearable audio device 200 with a GPS capability may be used to provide driving directions to a user.

The wearable audio device 200 includes one or more feedback microphones 250 for receiving a reflected acoustic signal to determine one or more acoustic properties of a pathway taken by an acoustic signal between wearable audio device 200 and a user's ear. For example, feedback microphone 250 may receive a reflected acoustic signal to determine one or more acoustic properties of a user's body. As an example and not by way of limitation, transducer assembly 100 may send an acoustic test signal into a user's body, and feedback microphone 250 may receive a portion of the test signal as a reflection (or, echo). The acoustic test signal may include a particular acoustic frequency, a combination or range of frequencies, or an acoustic pulse (e.g., an acoustic pulse with a 5 µs duration). The reflected acoustic signal may be reflected off one or more portions of a pathway, such as a user's body (e.g., muscle, tissue, bone, or a skin layer on a side opposite from the transducer assembly), and a processor of wearable audio device 200 may determine an acoustic property of the user's body based on one or more characteristics of the reflected signal (e.g., amplitude, phase, or frequency characteristics, or a time-of-flight between transmission of the acoustic test signal and receipt of the reflected signal). According to the invention, the reflected acoustic signal received by feedback microphone 250 is used to determine where audio device 200 is located on a person's body (e.g., on a person's wrist or about their neck), in one example it may also be used to determine a composition or thickness of nearby tissues (e.g., a thickness of skin layer 150, muscle, or fat).

In particular the wearable audio device 200 automatically adjusts one or more characteristics of an acoustic signal based on acoustic properties determined from a reflected acoustic signal received by feedback microphone 250. As an example and not by way of limitation, if wearable audio device 200 is determined to be relatively far from the user's ears (e.g., wearable audio device 200 is attached to the user's wrist), wearable audio device 200 may send an acoustic signal at an ultrasonic frequency range so the acoustic signal may be efficiently transmitted to the user's ears. As another example and not by way of limitation, if wearable audio device 200 is determined to be relatively close to the user's ears, wearable audio device 200 may send an acoustic signal at an audible frequency range. As another example the frequency of a carrier signal is adjusted based on a reflected acoustic signal. As another example and not by way of limitation, wearable audio device 200 may, based on a reflected acoustic signal, adjust the frequency of an ultrasonic acoustic signal within an ultrasonic frequency range, for example to more efficiently transmit the acoustic signal to a wearer's ear. The wearable audio device 200, based on a reflected acoustic signal, adjusts the frequency of an audible acoustic signal within an audible frequency range. Additionally or in the alternative, audio device 200 2. adjusts the amplitude of an acoustic signal based on a determination of where audio device 200 is located (e.g., acoustic-signal amplitude may be increased for locations farther from a user's ears). In particular embodiments, wearable audio device 200 may include feedback microphone 250 that is separate from one or more transducer assemblies 100 of wearable audio device 200. As an example and not by way of limitation, wearable audio device 200 may include one feedback microphone 250 and four transducer assemblies 100. In particular embodiments, one or more transducer assemblies 100 may be configured to function as feedback microphone 250. As an example and not by way of limitation, one or more transducer assemblies 100 of wearable audio device 200 may send an acoustic test signal into a person's body, and one or more transducer assemblies 100 of wearable audio device 200 may be configured to receive a portion of the reflected test signal and generate an electrical signal based on the received mechanical vibration. The one or more transducer assemblies 100 used to send and receive the signals may be the same transducer assemblies 100 or different transducer assemblies 100.

In particular embodiments, wearable audio device 200 may include an equalizer to adjust the relative amplitudes of different frequency components of an acoustic signal. As an example and not by way of limitation, frequencies that are attenuated more than others during propagation to a user's ears may be boosted by an equalizer to balance the sound heard by the user. In particular embodiments, wearable audio device 200 may automatically adjust an equalizer's settings based on acoustic properties of a user's body determined from a reflected acoustic test signal received by feedback microphone 250. In particular embodiments, a user may manually adjust the settings of an equalizer to modify the sound. As an example and not by way of limitation, while listening to music, a user may adjust the relative amplitudes of the bass or treble frequencies to match their preference. Additionally, a user may manually adjust the overall amplitude of an acoustic signal to change the volume of sound that is heard. In particular embodiments, wearable audio device 200 may include two or more transducer assemblies 100, and each transducer assembly 100 may be configured to operate over a particular frequency range. As an example and not by way of limitation, wearable audio device 200 may apply equalization to an acoustic signal by adjusting the relative amplitude of the drive signals for each of its transducer assemblies 100. In particular embodiments, wearable audio device 200 may include a discrete device that functions as an equalizer, or an equalizer function may be included within a processor of wearable audio device 200. Although this disclosure describes particular wearable audio devices that perform equalization in particular manners, this disclosure contemplates any suitable wearable audio devices that perform equalization in any suitable manner.

In particular embodiments, in addition to transducer assemblies 100, wearable audio device 200 may include any other suitable devices, including some, none, or all of the devices described herein. As an example and not by way of limitation, wearable audio device 200 may only include one or more transducer assemblies attached to or contained within a band or enclosure that may be worn by or attached to a portion of a user's body, and wearable audio device 200 may be connected by a cable to another device that includes one or more of the following: a power source, a processor, a communication device (e.g., BLUETOOTH device 220), an amplifier 230, a user microphone 240, a GPS-based device, or any other suitable device. As another example and not by way of limitation, in addition to one or more transducer assemblies 100, wearable audio device 200 may include battery 210, a processor, BLUETOOTH device 220, and amplifier 230. As another example and not by way of limitation, in addition to one or more transducer assemblies 100, wearable audio device 200 may include battery 210, a processor, BLUETOOTH device 200, amplifier 230, user microphone 240, and feedback microphone 250. Although this disclosure describes and illustrates particular wearable audio devices that include particular devices having particular functions, this disclosure contemplates any suitable wearable audio devices that include any suitable devices having any suitable functions.

In particular embodiments, an acoustic signal from transducer assembly 100 may be coupled to a person's body and may propagate through their body to one or both of the person's ears. An acoustic signal may propagate through any suitable part or combination of parts of a person's body, including but not limited to soft tissue (e.g., fat, muscle, skin, tendons, ligaments, fascia, connective tissue, nerves, or blood cells), organs, or bone. As an example and not by way of limitation, an acoustic signal from transducer assembly 100 coupled to a person's shoulder or neck area may be conducted to the person's ears by a combination of skin, muscle, fat, or bone. In particular embodiments, transducer assembly 100 may be configured to couple an acoustic signal to soft tissue (e.g., skin, fat, muscle, or any other suitable soft tissue) of a person's body and may not be configured to couple an acoustic signal to bone. As an example and not by way of limitation, transducer assembly 100 may couple an acoustic signal to skin, muscle, and fat located near transducer assembly 100, and once coupled to a person's body, the acoustic signal may propagate through the person's body through any suitable combination of soft tissue, organs, or bone. In particular embodiments, different frequencies of an acoustic signal may have different propagation characteristics when traveling through a person's body. As an example and not by way of limitation, lower-frequency acoustic waves may penetrate deeper into a person's body, while higher-frequency acoustic waves may have a lower depth of penetration and may propagate through the body primarily by skin layer 150 or by tissues or bones located closer to the skin surface. As another example and not by way of limitation, higher frequencies may experience less attenuation than lower frequencies when propagating through a person's body. In particular embodiments, an audible signal (e.g., a 20 Hz - 3 kHz signal) may be mixed with a higher-frequency carrier signal (e.g., a 40-kHz carrier signal) to form a modulated higher-frequency acoustic signal that may have lower propagation losses when traveling through a person's body than a lower-frequency acoustic signal. Although this disclosure describes particular acoustic signals propagating through a person's body in particular manners, this disclosure contemplates any suitable acoustic signals propagating through a person's body in any suitable manner.

In particular embodiments, after propagating through a person's body to their ear, an acoustic signal may interact with a portion of the person's ear (e.g., outer ear, middle ear, inner ear) to result in a sound being heard by the person. As an example and not by way of limitation, an acoustic signal may vibrate a portion of a person's ear, such as for example, the tympanic membrane, an auditory ossicle, the oval window, fluid of the inner ear, or any suitable portion or combination of portions of a person's ear. In particular embodiments, an acoustic signal in an audible frequency range (e.g., 20 Hz -20 kHz) may directly vibrate a portion of a person's ear resulting in the person hearing a sound corresponding to the audible acoustic signal. As an example and not by way of limitation, a low-frequency acoustic signal (e.g., 100 Hz) may result in a person hearing a low tone (e.g., a 100-Hz tone), while a high-frequency acoustic signal (e.g., 8 kHz) may result in the person hearing a high tone (e.g., a 8-kHz tone). In particular embodiments, an acoustic signal in an ultrasonic frequency range may vibrate a portion of a person's ear resulting in the person hearing a sound corresponding to an audible frequency. As an example and not by way of limitation, an acoustic signal that includes an ultrasonic carrier frequency (e.g., 30 kHz) with an amplitude modulation in an audible frequency range may be substantially low-pass filtered by a portion of a person's ear resulting in the person hearing a sound corresponding to the envelope audible-frequency portion of the acoustic signal. As another example and not by way of limitation, an acoustic signal that includes an ultrasonic carrier frequency with a modulation in an audible frequency range may be converted by a portion of a person's ear into an audible signal corresponding to the modulated audible portion. In particular embodiments, two or more acoustic signals in an ultrasonic frequency range may combine at a person's ear to produce an audible signal that the person may hear. As an example and not by way of limitation, two or more different signals may be applied to two or more respective transducer assemblies 100, and the resulting acoustic signals may add constructively at a person's ear and produce an audible signal that the person may hear. The two or more signals may both be in the ultrasonic frequency range, and they may differ in terms of their frequencies or relative phases. Although this disclosure describes particular acoustic signals that produce sound in a person's ear in particular manners, this disclosure contemplates any suitable acoustic signals that produce sound in a person's ear in any suitable manner.

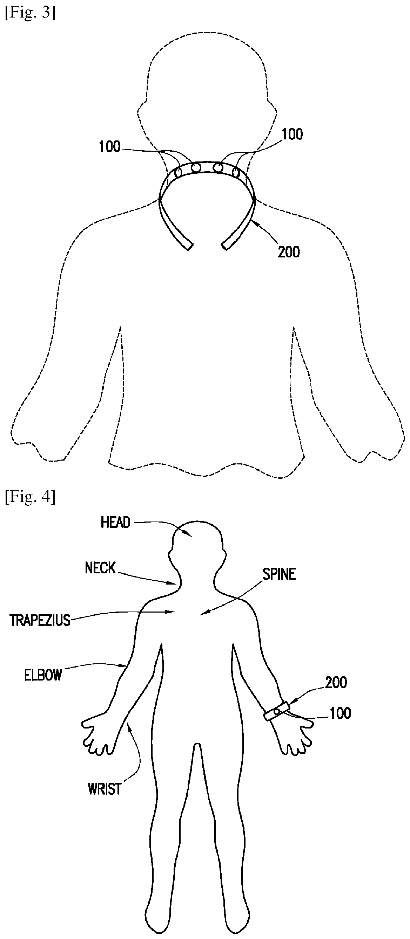

FIG. 3 illustrates an example wearable audio device 200 worn about a person's neck. In particular embodiments, wearable audio device 200 may include one or more transducer assemblies 100 configured to send one or more acoustic signals through a person's body resulting in sounds that may be heard by the wearer of audio device 200. In particular embodiments, transducer assemblies 100 may allow wearable audio device 200 to be used for media playback or phone conversations. In the example of FIG. 3, wearable audio device 200 may include two or more transducer assemblies 100 configured for transmission of stereophonic sound to the wearer's ears. One or more transducer assemblies 100 may be configured to provide sound primarily to the wearer's left ear, and one or more other transducer assemblies 100 may be configured to provide sound primarily to the wearer's right ear. In particular embodiments, wearable audio device 200 may include one or more weights (such as, for example, in a counterbalanced neckband) to ensure good physical contact between transducer assemblies 100 and a wearer's skin 150. In the example of FIG. 3, the two ends of wearable audio device 200 that extend down may each contain a small weight or an electronic component of audio device (e.g., a battery) that adds weight to the end. In particular embodiments, wearable audio device 200 may include a flexible or tensioned band configured to provide mechanical contact between transducer assemblies 100 and a wearer's skin 150. As an example and not by way of limitation, wearable audio device 200 may include a flexible band that can be wrapped around a person's wrist or arm and provide tension so that transducer assemblies 100 have good mechanical contact with a wearer's skin 150.

FIG. 4 illustrates example contact locations for wearable audio device 200. In particular embodiments, wearable audio device 200 may be worn around or near a person's wrist, elbow, trapezius, spine, neck, head, or forehead. As illustrated in FIG. 4, wearable audio device 200 may be worn around a person's wrist (e.g., in a watch, bracelet, or wrist band) and may include transducer assembly 100 to transmit audio notifications (e.g., a beep, click, or tone) to the wearer's ears. As another example and not by way of limitation, wearable audio device 200 may include a tensioned headband that is worn around a person's forehead. As another example and not by way of limitation, wearable audio device 200 may be worn about a person's neck or shoulder area and may couple an acoustic signal to skin, muscle, fat, or other soft tissue near the person's neck, spine, or trapezius. Although this disclosure describes and illustrates particular audio devices having particular contact locations with a user's body, this disclosure contemplates any suitable audio devices having any suitable contact locations with a user's body.

In particular embodiments, wearable audio device 200 may utilize body-transmitted acoustics in an audible or ultrasonic range allowing sound to be heard by a user without having their ears covered or occluded. As an example and not by way of limitation, a user may be able to listen to audio from wearable audio device 200 while still being able to hear sound from their surroundings. In particular embodiments, wearable audio device 200 may be used for environmental-noise cancellation where microphone 240 samples surrounding acoustic noise, and one or more transducer assemblies 100 send a noise-cancelling acoustic signal to a user's ears to reduce environmental noise heard by the user. In particular embodiments, wearable audio device 200 may be used to send any suitable acoustic signal to a user's ears, such as for example, a noise-cancelling signal, a background sound or noise (e.g., acoustic white noise), an alert, a notification, navigation information (e.g., driving directions), a phone conversation, media playback (e.g., music or sound from a video), or any suitable combination thereof. In particular embodiments, wearable audio device 200 may send audio signals to a user without that signal being overheard by other people nearby. As an example and not by way of limitation, wearable audio device 200 may allow for private notifications (e.g., a beep, click, or tone that indicates the user received a message, email, or phone call) that may only heard by the wearer. In particular embodiments, wearable audio device 200 may be incorporated into a neck pillow. As an example and not by way of limitation, a neck pillow with wearable audio device 200 may be used for noise cancellation during airplane travel. In particular embodiments, wearable audio device 200 may be incorporated into clothing. As an example and not by way of limitation, wearable audio device 200 may be incorporated into a collar of a shirt or sweater. In particular embodiments, wearable audio device 200 may be incorporated into a helmet or a head or neck support of a car seat and may provide an audio signal through contact with a portion of a person's head or neck. As an example and not by way of limitation, a wearable audio device 200 incorporated into a car seat neck support may be used to provide driving directions. Although this disclosure describes and illustrates particular wearable audio devices configured to provide particular acoustic signals to a user, this disclosure contemplates any suitable wearable audio devices configured to provide any suitable acoustic signals to a user.

In particular embodiments, wearable audio device 200 may be used to determine a person's posture or body position. As an example and not by way of limitation, wearable audio device 200 may be used to determine whether a person's posture is straight or slouched or whether a person is standing, sitting, or lying down based on one or more acoustic properties of a person's body. In particular embodiments, and as described more fully herein, wearable audio device 200 may send an acoustic test signal into a user's body, and feedback microphone 250 may receive a portion of the reflected test signal. Based on one or more characteristics of the received reflected signal (e.g., amplitude, phase, frequency, or time-of-flight), wearable audio device 200 may determine a person's posture or body position. As an example and not by way of limitation, wearable audio device 200 may be worn about a person's neck or shoulder area, and one or more characteristics of a received reflected signal may change depending on whether a person is standing, sitting, or lying down. In particular embodiments, wearable audio device 200 may provide a message or notification to a user (or may refrain from providing a message or notification to the user) based on their determined posture or body position. As an example and not by way of limitation, if wearable audio device 200 determines that a user has poor or slouched posture, wearable audio device 200 may send an audio notification or message to the user reminding them to maintain a better posture. As another example and not by way of limitation, if wearable audio device 200 determines that a user is lying down, then wearable audio device 200 may refrain from sending a message or notification to the user since they may be resting or sleeping and not wish to be disturbed. Although this disclosure describes and illustrates particular wearable audio devices 200 configured to determine particular body positions of a person, this disclosure contemplates any suitable wearable audio devices configured to determine any suitable body positions of a person.

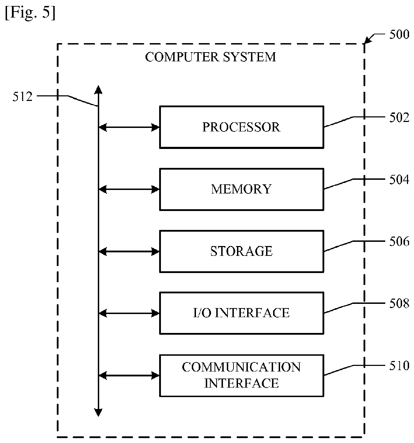

FIG. 5 illustrates an example computer system 500. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

This disclosure contemplates any suitable number of computer systems 500. This disclosure contemplates computer system 500 taking any suitable physical form. As example and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In particular embodiments, memory 504 includes main memory for storing instructions for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate, and this RAM may be dynamic RAM (DRAM) or static RAM (SRAM), where appropriate. Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 508 for them. Where appropriate, I/ O interface 508 may include one or more device or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), body area network (BAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

Although this disclosure describes or illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend, as long as they would not depart from the scope of the invention as set forth in the accompanying claims. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

## Claims

1. A device (200) comprising:
a first transducer (110) configured to vibrate within a first frequency range to generate a signal audible by a wearer of the device;
a first material (120) on or near a first surface of the first transducer (110), the first material (120) having an acoustic impedance at one or more frequencies within the first frequency range that is substantially similar to an acoustic impedance of the wearer's skin (150) at the one or more frequencies;
a second material (130) on or near at least a second surface of the first transducer (110), the second material (130) having an acoustic impedance at one or more frequencies within the first frequency range that substantially differs from an acoustic impedance of an environment of the device; and
**characterized by**: further comprising
a microphone (250) configured to receive a reflected signal of the generated signal reflected by the wearer's body;
and wherein the device is further configured to:
determine, based on the received reflected signal, a location of the device (100) relative to at least one of the wearer's ears; and
adjust a frequency or an amplitude of the signal generated by the first transducer (110) based on the determined location of the device (100)

2. The device of Claim 1, wherein the environment comprises air.

3. The device of Claim 1, wherein the first material (120) is conformable to a surface of the wearer's skin (150).

4. The device of Claim 1, wherein the first frequency range includes one or more audible frequencies.

5. The device of Claim 1, wherein the first frequency range includes one or more ultrasonic frequencies.

6. The device of Claim 1, further comprising an additional microphone (240), wherein the additional microphone (250) is configured to receive an environmental acoustic signal from an environment of the wearer, and
wherein, based on the received environmental acoustic signal, the device (100) is further configured to control first transducer (110 to vibrate to generate a noise-cancelling signal to reduce environmental noise.

7. The device of Claim 1, wherein a vibration of the first transducer (110) is based on one or more user-configurable settings.

8. The device of Claim 1, further comprising a global positioning system sensor.

9. The device of Claim 1, further comprising a radio frequency transceiver.

10. The device of Claim 1, wherein the first material (120) comprises one or more of: a gel, a foam, a rubber, or a metal.

11. The device of Claim 1, wherein the second material (130) comprises one or more of:
a cotton and a plastic,
a cotton, a cork, and a rubber,
a vinyl and a polyurethane foam,
a soundproof foam, or
a gel.

12. The device of Claim 1 further comprising a third material (140) that encloses the first transducer (110) and surrounds the first material (120) while leaving the first material (120) on or near a first surface of the first transducer (110) exposed for contact with the wearer's skin (150), wherein the third material (140) comprises one or more of: a thin vinyl material, a thick vinyl material, an ultrasound gel pad, or a rubber casing.

13. The device of claim 1 wherein the device (200) further comprises one or more of:
a counterbalanced neckband; or
a tensioned headband.

14. A method comprising:
generating, by a transducer (110) vibrating within a first frequency range, a signal audible by a wearer of a device;
substantially matching an acoustic impedance of the wearer's skin (150) and an acoustic impedance of a first material (120) at one or more frequencies within the first frequency range, the first material (120) being provided on or near a first surface of the first transducer (110); and
substantially mismatching an acoustic impedance of an environment of the device (200) and an acoustic impedance of a second material (130) at one or more frequencies within the first frequency range, the second material being provided on or near at least a second surface of the first transducer (110), the method **characterized by** the fact that the generated signal is reflected on the wearer's body and is received by a microphone (250); and by further comprising:
determining, based on the received reflected signal, a location of the device (100) relative to at least one of the wearer's ears; and
adjusting a frequency or an amplitude of the signal generated by the first transducer (110) based on the determined location of the device (100).

## Patentansprüche

1. Vorrichtung (200), umfassend:
einen ersten Wandler (110), der konfiguriert ist, um innerhalb eines ersten Frequenzbereichs zu vibrieren, um ein Signal zu erzeugen, das von einem Träger der Vorrichtung hörbar ist;
ein erstes Material (120) auf oder nahe einer ersten Oberfläche des ersten Wandlers (110), wobei das erste Material (120) eine akustische Impedanz bei einer oder mehreren Frequenzen innerhalb des ersten Frequenzbereichs aufweist, die im Wesentlichen ähnlich einer akustischen Impedanz der Haut (150) des Trägers bei der einen oder den mehreren Frequenzen ist;
ein zweites Material (130) auf oder nahe zumindest einer zweiten Oberfläche des ersten Wandlers (110), wobei das zweite Material (130) eine akustische Impedanz bei einer oder mehreren Frequenzen innerhalb des ersten Frequenzbereichs aufweist, die sich im Wesentlichen von einer akustischen Impedanz einer Umgebung der Vorrichtung unterscheidet; und
**gekennzeichnet durch**:
ferner umfassend
ein Mikrofon (250), das konfiguriert ist, um ein reflektiertes Signal des erzeugten Signals zu empfangen, das von dem Körper des Trägers reflektiert wird;
und wobei die Vorrichtung ferner für Folgendes konfiguriert ist:
Bestimmen, basierend auf dem empfangenen reflektierten Signal, eines Standortes der Vorrichtung (100) relativ zu zumindest einem der Ohren des Trägers; und
Anpassen einer Frequenz oder einer Amplitude des Signals, das von dem ersten Wandler (110) erzeugt wird, basierend auf dem bestimmten Standort der Vorrichtung (100).

2. Vorrichtung nach Anspruch 1, wobei die Umgebung Luft umfasst.

3. Vorrichtung nach Anspruch 1, wobei das erste Material (120) an eine Oberfläche der Haut (150) des Trägers anschmiegsam ist.

4. Vorrichtung nach Anspruch 1, wobei der erste Frequenzbereich eine oder mehrere hörbare Frequenzen beinhaltet.

5. Vorrichtung nach Anspruch 1, wobei der erste Frequenzbereich eine oder mehrere Ultraschallfrequenzen beinhaltet.

6. Vorrichtung nach Anspruch 1, ferner umfassend ein zusätzliches Mikrofon (240), wobei das zusätzliche Mikrofon (250) konfiguriert ist, um ein akustisches Umgebungssignal von einer Umgebung des Trägers zu empfangen, und
wobei, basierend auf dem empfangenen akustischen Umgebungssignal, die Vorrichtung (100) ferner konfiguriert ist, um ersten Wandler (110 zu steuern, dass er vibriert, um ein Geräuschunterdrückungssignal zu erzeugen, um Umgebungsgeräusche zu reduzieren.

7. Vorrichtung nach Anspruch 1, wobei eine Vibration des ersten Wandlers (110) auf einer oder mehreren benutzerkonfigurierbaren Einstellungen basiert.

8. Vorrichtung nach Anspruch 1, ferner umfassend einen Sensor für ein globales Positionsbestimmungssystem.

9. Vorrichtung nach Anspruch 1, ferner umfassend einen Funkfrequenz-Sendeempfänger.

10. Vorrichtung nach Anspruch 1, wobei das erste Material (120) eines oder mehrere von Folgendem umfasst: ein Gel, einen Schaum, einen Gummi oder ein Metall.

11. Vorrichtung nach Anspruch 1, wobei das zweite Material (130) eines oder mehrere von Folgendem umfasst:
eine Baumwolle und einen Kunststoff,
eine Baumwolle, ein Kork und einen Gummi,
ein Vinyl und einen Polyurethanschaum,
einen schalldichten Schaum, oder
ein Gel.

12. Vorrichtung nach Anspruch 1, ferner umfassend ein drittes Material (140), das den ersten Wandler (110) umschließt und das erste Material (120) umgibt, während es das erste Material (120) auf oder nahe einer ersten Oberfläche des ersten Wandlers (110) exponiert für Kontakt mit der Haut (150) des Trägers lässt, wobei das dritte Material (140) eines oder mehrere von Folgendem umfasst: ein dünnes Vinylmaterial, ein dickes Vinylmaterial, ein Ultraschallgelkissen oder ein Gummigehäuse.

13. Vorrichtung nach Anspruch 1, wobei die Vorrichtung (200) ferner eines oder mehrere von Folgendem umfasst:
ein Halsband mit Gegengewicht; oder
ein gespanntes Stirnband.

14. Verfahren, umfassend:
Erzeugen, durch einen Wandler (110), der innerhalb eines ersten Frequenzbereichs vibriert, eines Signals, das von einem Träger einer Vorrichtung hörbar ist;
im Wesentlichen Zuordnen einer akustischen Impedanz der Haut (150) des Trägers und einer akustischen Impedanz eines ersten Materials (120) bei einer oder mehreren Frequenzen innerhalb des ersten Frequenzbereichs, wobei das erste Material (120) auf oder nahe einer ersten Oberfläche des ersten Wandlers (110) bereitgestellt ist; und
im Wesentlichen Fehlzuordnen einer akustischen Impedanz einer Umgebung der Vorrichtung (200) und einer akustischen Impedanz eines zweiten Materials (130) bei einer oder mehreren Frequenzen innerhalb des ersten Frequenzbereichs, wobei das zweite Material auf oder nahe zumindest einer zweiten Oberfläche des ersten Wandlers (110) bereitgestellt ist,
wobei das Verfahren durch die Tatsache gekennzeichnet ist, dass das erzeugte Signal an dem Körper des Trägers reflektiert wird und von einem Mikrofon (250) empfangen wird; und dadurch, dass es ferner Folgendes umfasst:
Bestimmen, basierend auf dem empfangenen reflektierten Signal, eines Standortes der Vorrichtung (100) relativ zu zumindest einem der Ohren des Trägers; und
Anpassen einer Frequenz oder einer Amplitude des Signals, das von dem ersten Wandler (110) erzeugt wird, basierend auf dem bestimmten Standort der Vorrichtung (100).

## Revendications

1. Dispositif (200), comprenant :
un premier transducteur (110) configuré pour vibrer dans une première plage de fréquences afin de générer un signal audible par un porteur du dispositif ;
un premier matériau (120) sur ou à proximité d'une première surface du premier transducteur (110), le premier matériau (120) ayant une impédance acoustique à une ou plusieurs fréquences dans la première plage de fréquences qui est sensiblement similaire à une impédance acoustique de la peau du porteur (150) à l'une ou plusieurs fréquences ;
un deuxième matériau (130) sur ou à proximité d'au moins une deuxième surface du premier transducteur (110), le deuxième matériau (130) ayant une impédance acoustique à une ou plusieurs fréquences dans la première plage de fréquences qui diffère sensiblement d'une impédance acoustique d'un environnement du dispositif ; et
**caractérisé par** :
comprenant en outre
un microphone (250) configuré pour recevoir un signal réfléchi du signal généré réfléchi par le corps de l'utilisateur ;
et dans lequel le dispositif est en outre configuré pour :
déterminer, sur la base du signal réfléchi reçu, un emplacement du dispositif (100) par rapport à au moins une des oreilles du porteur ; et
régler une fréquence ou une amplitude du signal généré par le premier transducteur (110) sur la base de l'emplacement déterminé du dispositif (100).

2. Dispositif selon la revendication 1, dans lequel l'environnement comprend l'air.

3. Dispositif selon la revendication 1, dans lequel le premier matériau (120) peut se conformer à une surface de la peau du porteur (150).

4. Dispositif selon la revendication 1, dans lequel la première plage de fréquences comprend une ou plusieurs fréquences audibles.

5. Dispositif selon la revendication 1, dans lequel la première plage de fréquences comprend une ou plusieurs fréquences ultrasonores.

6. Dispositif selon la revendication 1, comprenant en outre un microphone supplémentaire (240), dans lequel le microphone supplémentaire (250) est configuré pour recevoir un signal acoustique environnemental provenant d'un environnement du porteur, et
dans lequel, sur la base du signal acoustique environnemental reçu, le dispositif (100) est en outre configuré pour commander au premier transducteur (110 de vibrer afin de générer un signal de suppression de bruit pour réduire le bruit environnemental.

7. Dispositif selon la revendication 1, dans lequel une vibration du premier transducteur (110) est basée sur un ou plusieurs paramètres configurables par l'utilisateur.

8. Dispositif selon la revendication 1, comprenant en outre un capteur de système de positionnement global.

9. Dispositif selon la revendication 1, comprenant en outre un émetteur-récepteur radiofréquence.

10. Dispositif selon la revendication 1, dans lequel le premier matériau (120) comprend un ou plusieurs parmi : un gel, une mousse, un caoutchouc ou un métal.

11. Dispositif selon la revendication 1, dans lequel le deuxième matériau (130) comprend un ou plusieurs parmi :
un coton et un plastique,
un coton, un liège et un caoutchouc,
un vinyle et une mousse polyuréthane,
une mousse acoustique, ou
un gel.

12. Dispositif selon la revendication 1, comprenant en outre un troisième matériau (140) qui entoure le premier transducteur (110) et entoure le premier matériau (120) tout en laissant le premier matériau (120) sur ou à proximité d'une première surface du premier transducteur (110) exposé pour un contact avec la peau du porteur (150), dans lequel le troisième matériau (140) comprend un ou plusieurs parmi : un matériau vinyle mince, un matériau vinyle épais, un tampon de gel à ultrasons ou un boîtier en caoutchouc.

13. Dispositif selon la revendication 1, dans lequel le dispositif (200) comprend en outre un ou plusieurs parmi :
un tour de cou contrebalancé ; ou
un serre-tête tendu.

14. Procédé comprenant :
la génération, par un transducteur (110) vibrant dans une première plage de fréquences, d'un signal audible par un porteur d'un dispositif ;
l'association sensible d'une impédance acoustique de la peau du porteur (150) et d'une impédance acoustique d'un premier matériau (120) à une ou plusieurs fréquences dans la première plage de fréquences, le premier matériau (120) étant prévu sur ou à proximité d'une première surface du premier transducteur (110) ; et
la dissociation sensible d'une impédance acoustique d'un environnement du dispositif (200) et d'une impédance acoustique d'un deuxième matériau (130) à une ou plusieurs fréquences dans la première plage de fréquences, le deuxième matériau étant prévu sur ou à proximité d'au moins une deuxième surface du premier transducteur (110),
le procédé **caractérisé par le fait que** le signal généré soit réfléchi sur le corps du porteur et soit reçu par un microphone (250) ; et comprenant en outre :
la détermination, sur la base du signal réfléchi reçu, d'un emplacement du dispositif (100) par rapport à au moins une des oreilles du porteur ; et
le réglage d'une fréquence ou d'une amplitude du signal généré par le premier transducteur (110) sur la base de l'emplacement déterminé du dispositif (100).
